# DEMANDE DE BREVET EUROPEEN

(11) **EP 1 997 689 A1**
(43) Date de publication de la demande: **03.12.2008**
(21) Numéro de dépôt: 07109233.2
(22) Date de dépôt: 30.05.2007
(51) Int. Cl.: B60R 19/18

(54) **Poutre de pare-chocs pour vehicule comprenant des poutres externe et interne**

(71) Demandeur: Cadence Innovation, 27950 Saint Marcel (FR)
(72) Inventeur: Renault, Thierry, 27200, Vernon (FR); Delande, Muriel, 27790, Rosay-sur-Lieure (FR)
(74) Mandataire: Texier, Christian

(57) **Abrégé**

La poutre (2) de pare-chocs pour véhicule comprend une poutre externe (4) définissant une cavité présentant un fond (12) et destinée à être ouverte en direction de l'intérieur du véhicule et une poutre interne (6) reçue dans la cavité, la poutre interne étant en appui contre le fond.

## Description

L'invention concerne les pare-chocs de véhicules automobiles.

On sait que les pare-chocs de véhicules comprennent de nos jours des poutres disposées derrière la peau du pare-chocs et utilisées pour répondre à différents types de chocs standards tels que le choc parking, le choc de réparabilité ou le choc haute vitesse. Ces chocs sont régis par différentes réglementations.

Ainsi, le choc dit « choc petite vitesse » est régi par les normes :
- ECE 42 en Europe ;
- FVMSS 215 Part 581 aux Etats-Unis ; et
- CMVSS 215 au Canada.

Ces tests correspondent à différents types d'impact à une vitesse maximale de 4 km/h pour l'Europe et les Etats-Unis et de 8 km/h pour le Canada. Ainsi, le cahier des charges du choc parking ECE 42 est associé à un ensemble de chocs à 4 km/h. L'état d'acceptation dépend d'une cotation des dommages visibles, elle-même dépendante de chaque constructeur. Il ne doit se produire aucune fuite de liquide après le choc. Le dispositif d'éclairage doit fonctionner. Les ouvrants doivent être opérationnels et le système d'échappement ne doit pas subir de dommage.

Le choc « moyenne vitesse », également appelé « insurance tests » obéit aux réglementations suivantes :
- Allianz (ou Danner ou réparabilité) en Europe ; et
- IIHS aux Etats-Unis.

Le test Allianz est un test réalisé à environ 15 km/h sur un mur couvrant 40% de la largeur du véhicule. Il vise à minimiser les coûts de réparation sachant que les ailes, le capot et la structure du véhicule ne doivent pas présenter de dommage. Les efforts transversaux doivent être les plus minimes possibles afin de ne pas déstabiliser la structure du véhicule. Le cahier des charges du choc IIHS concerne un choc à 8 km/h à l'avant contre un mur rigide centré et décalé, et à l'arrière contre un mur rigide et un poteau centré. L'ensemble des chocs ne doit pas engendrer de coûts de réparation supérieurs à une limite fixée par le constructeur du véhicule.

Enfin, dans le cahier des charges du choc à haute vitesse, on produit un choc frontal ou à l'arrière sur une barrière déformable sous différents angles et à des vitesses allant de 53 à 65 km/h avec divers taux de recouvrement. La poutre ne doit pas se déchirer ni s'enrouler autour de la barrière ni encore exploser en éclats. Elle ne doit pas se dissocier des absorbeurs de chocs fixés aux extrémités pour répondre aux chocs de réparabilité.

Une poutre de pare-chocs mise sur le marché aujourd'hui doit répondre à ces différents tests. Pour répondre à l'ensemble de ces réglementations, les points les plus critiques sont :
- le respect du design du véhicule ;
- l'efficacité de l'absorption d'énergie au plus tôt de l'impact ;
- le système de fixation du pare-chocs sur le véhicule ou celui du pare-chocs intégré.

Ajoutons que les caractéristiques doivent être vérifiées sur une plage de température allant de -20°C à +80°C.

On connaît des poutres composites thermoplastiques qui répondent au cahier des charges ECE 42 avec choc à 4 km/h ainsi qu'au test Allianz. Elles permettent des géométries complexes et intègrent d'autres fonctions. On connaît aussi des poutres métalliques qui répondent favorablement aux différents types de chocs IIHS à 8 km/h et aux chocs haute vitesse, plus critiques en termes d'absorption d'énergie. Cependant ces poutres sont lourdes et ne peuvent présenter que des géométries simplifiées.

Lorsqu'on réalise ces différents chocs, on peut formuler les observations suivantes. Lors des essais de choc parking ECE 42, l'ensemble des impacteurs (butoirs ou poteaux) sollicitent peu les systèmes d'absorption tels que les poutres, le niveau d'énergie atteint étant relativement faible. L'essai de choc Allianz, quant à lui, sollicite principalement les absorbeurs latéraux se trouvant de part et d'autre du barreau central de la poutre. Les poutres actuelles en matériau composite répondent déjà à ces deux cahiers des charges.

L'ensemble des chocs IIHS sollicite beaucoup plus la poutre. En particulier, le choc à 8 km/h contre le poteau au centre du barreau à l'arrière du véhicule est le plus critique puisque les niveaux d'énergie mis en jeu sont beaucoup plus importants. Enfin, les chocs haute vitesse requièrent une très haute rigidité du barreau central afin de ne pas dégrader la fonction réparabilité. Les poutres en matériau composite thermoplastique à base de polypropylène n'absorbent pas l'énergie nécessaire lors du choc et cassent systématiquement.

Un but de l'invention est de faire en sorte que le pare-chocs réponde à la fois aux réglementations européennes et nord-américaines, réalise une haute absorption d'énergie, soit léger et permette l'intégration de différentes fonctions.

A cet effet, on prévoit selon l'invention une poutre de pare-chocs pour véhicule comprenant :
- une poutre externe définissant une cavité présentant un fond et destinée à être ouverte en direction de l'intérieur du véhicule ; et
- une poutre interne reçue dans la cavité, et en appui contre le fond.

A cet effet, on prévoit également une poutre de pare-chocs pour véhicule, comprenant :
- une poutre externe définissant une cavité présentant un fond, et comprenant une face externe courbe suivant une direction longitudinale de la poutre ; et
- une poutre interne reçue dans la cavité du même côté de la face qu'un centre de courbure de la face, et en appui contre le fond.

Ainsi, la poutre externe permet en elle-même de répondre aux chocs parking petite vitesse en Europe. Elle apporte la raideur nécessaire pour résister sans dommage aux chocs ECE 42. Pour répondre aux chocs IIHS ou pour passer les chocs à haute vitesse (65 km/h) contre une barrière déformable, la poutre intérieure agit comme une nervure de préférence tout au long du barreau central. Elle donne à l'ensemble une robustesse et une rigidité plus grandes, principalement au centre du barreau de la poutre. En dépit de cette robustesse plus importante, la poutre conserve un poids faible.

La poutre selon l'invention pourra présenter en outre au moins l'une quelconque des caractéristiques suivantes :
- l'appui s'étend sur plus de la moitié de la longueur de la poutre ;
- le fond est plat ;
- au moins l'une des poutres externe et interne a un profil en « U », notamment en « Ω » ;
- la poutre interne comprend des parois supérieure et inférieure, une distance entre les parois supérieure et inférieure étant plus faible dans une zone médiane de la poutre que dans des zones d'extrémité de la poutre ;
- la poutre interne comprend des parois supérieure et inférieure s'étendant respectivement à distance de parois supérieure et inférieure de la poutre externe ;
- la poutre interne présente des bords supérieur et inférieur en appui contre des bords supérieur et inférieur de la poutre externe ;
- les bords sont parallèles au fond ; et
- au moins l'une des poutres externe et interne est en matière synthétique, notamment en matière plastique, de préférence renforcée.

On prévoit également selon l'invention un pare-chocs pour véhicule comportant une poutre selon l'invention.

On prévoit également selon l'invention un véhicule comprenant un pare-chocs selon l'invention, le pare-chocs faisant partie du groupe suivant :
- un pare-chocs avant ; et
- un pare-chocs arrière.

On prévoit enfin selon l'invention un procédé de fabrication d'une poutre de pare-chocs de véhicule, dans lequel on place une poutre interne dans une cavité d'une poutre externe destinée à être ouverte en direction de l'intérieur du véhicule, avec la poutre interne en appui contre un fond de la cavité.

Le procédé selon l'invention pourra présenter en outre au moins l'une quelconque des caractéristiques suivantes :
- on fixe les poutres externe et interne l'une à l'autre par soudage, collage et/ou vissage ; et
- on forme des cordons sur au moins l'une des poutres externe et interne en vue d'un soudage des poutres par vibration.

D'autres caractéristiques et avantages de l'invention apparaîtront encore dans la description suivante d'un mode préféré de réalisation donné à titre d'exemple non limitatif en référence aux dessins annexés sur lesquels :
- la figure 1 est une vue en perspective éclatée d'une poutre selon un mode préféré de réalisation de l'invention, montrant les poutres externe et interne ;
- la figure 2 est une vue en perspective de dessous de la poutre de la figure 1 à l'état monté ;
- la figure 3 est une vue de côté de la poutre de la figure 1 ;
- les figures 4 et 5 sont des vues en section respectivement éclatée et à l'état monté de la poutre de la figure 1 ;
- la figure 6 est une vue à plus grande échelle du détail D de la figure 5;
- les figures 7 et 8 sont des vues respectivement arrière et en perspective de la poutre externe de la figure 1 montrant la position des cordons de soudure ;
- la figure 9 est un diagramme relatif à un essai effectué sur une poutre selon l'invention.

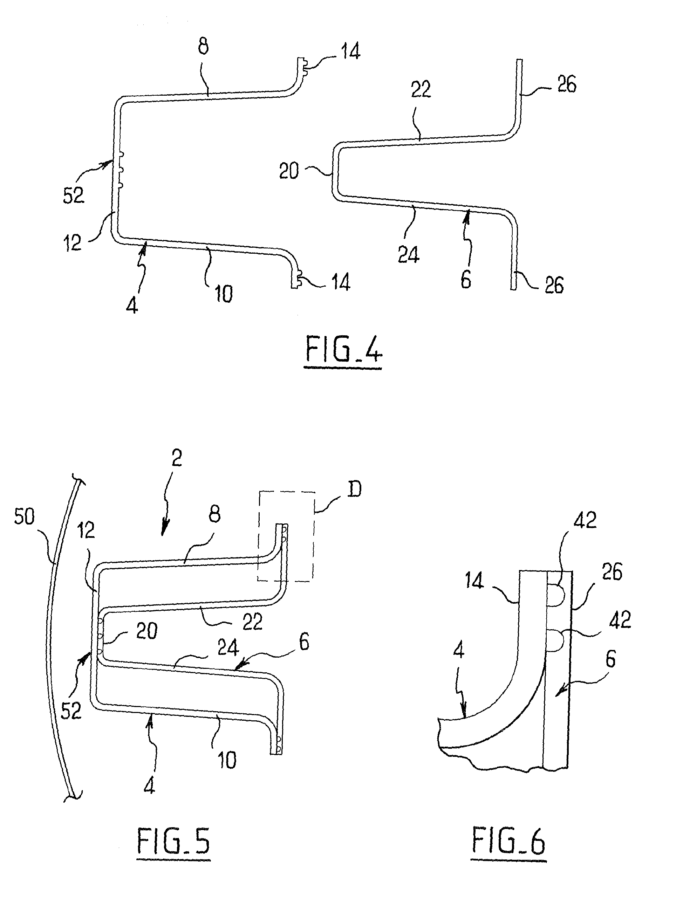

On va décrire en référence aux figures un mode préféré de réalisation d'une poutre de pare-chocs de véhicule selon l'invention. La poutre 2 comprend une poutre ou coque externe 4 et une poutre ou coque interne 6. La poutre externe 4 présente une forme générale profilée à section transversale en « U » et même, comme c'est le cas ici, en « Ω ». La poutre externe comprend ainsi une paroi supérieure 8, une paroi inférieure 10 et un fond ou paroi verticale 12. Le fond forme la base du « U » ou le sommet de l'« Ω » tandis que les parois forment les branches du « U » ou de l'« Ω ». Les parois supérieure et inférieure présentent donc des bords longitudinaux, situés à gauche sur la figure 4, reliés par le fond 12. Les autres bords longitudinaux 14 des parois 8 et 10 s'étendent vers l'extérieur en étant parallèles au fond 12. Aux extrémités de la poutre externe, le profilé formant la plus grande partie de la poutre est obturé par des parois d'extrémité 16 et le bord 14 s'étend également au niveau de ces parois.

La poutre interne 6 a une forme homologue de celle de la poutre externe. Elle présente ainsi une forme en « U » et en « Ω » ainsi qu'un fond 20, des parois supérieure 22 et inférieure 24 avec un bord 26 s'étendant tout autour de la pièce y compris au niveau des parois d'extrémité.

Comme illustré sur les figures, la poutre interne est prévue pour être reçue à l'intérieur de la poutre externe de sorte que, d'une part, le fond 20 vient en contact avec le fond 12 et d'autre part, les bords 26 viennent en contact avec les bords 14 comme illustré à la figure 5.

Le contact des fonds 12 et 20 est ici un contact surfacique se produisant notamment sur toute la surface du fond 20 de la poutre interne qui présente une superficie inférieure à celle du fond 12. II a lieu sur la plus grande partie de la longueur de la poutre jusqu'au niveau de ses parois d'extrémité 16.

II en est de même pour le contact entre les bords 14 et 26 qui est ici un contact surfacique se produisant sur tout le pourtour des poutres.

La poutre interne 6 est donc reçue dans la cavité formée par les parois supérieure 8 et inférieure 10 et le fond 12 ainsi que les parois d'extrémité.

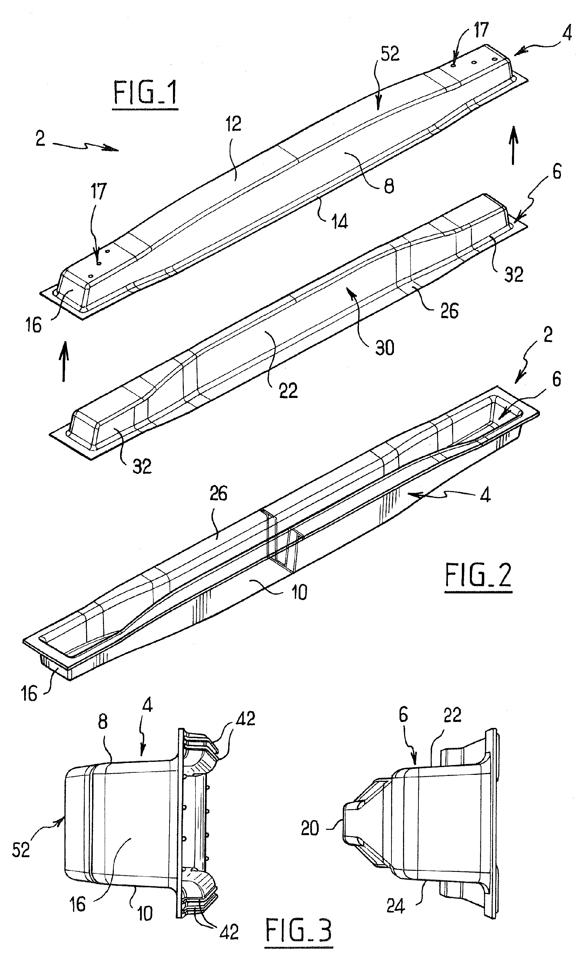

Dans la poutre interne 6, les parois supérieure et inférieure 22 et 24 s'étendent plus près l'une de l'autre dans une zone médiane de la poutre référencée 30 sur la figure 1 que dans des zones d'extrémité référencées 32. Cette zone médiane correspond à la partie dénommée le barreau de la poutre. La zone 30 correspond à au moins deux tiers voire trois quarts de la longueur de la poutre. Ainsi, alors que dans les zones d'extrémité 32, les parois 22 et 24 pourront être en contact surfacique avec les parois respectives 8 et 10 de la poutre externe, ce contact est interrompu dans la zone médiane 30, comme on le voit sur la figure 5. Dans cette zone, la paroi 22 s'étend à distance de la paroi 8 sans aucun point de contact entre elles et parallèlement à cette dernière. Il en est de même pour les parois 24 et 10.

On observe que les deux pièces formant la poutre 2 ont une épaisseur de paroi relativement fine, ce qui permet de réduire le temps de refroidissement après moulage par compression et donc le temps de cycle. Toutefois, sur la pièce assemblée, l'épaisseur totale est doublée aux endroits critiques qui sont très sollicités lors de l'impact.

On a illustré à la figure 5 la peau de pare-chocs 50 qui fait partie du pare-chocs selon l'invention de même que la poutre qui vient d'être décrite. La cavité de la poutre externe est orientée vers l'intérieur du véhicule, que le pare-chocs soit un pare-chocs avant ou un pare-chocs arrière. Elle est donc orientée vers l'arrière sur un pare-chocs avant et vers l'avant sur un pare-chocs arrière.

La poutre 2 présente, notamment visible sur la face externe 52 de la poutre externe, une courbure longitudinale ou galbe correspondant à la direction transversale du véhicule. La cavité s'étend du même côté du fond 12 que le centre de courbure de cette face 52. Le centre de courbure est en effet disposé du côté du fond 12 le plus proche du centre du véhicule. La peau 50 vient en regard de la face externe 52 de la poutre externe 4.

La poutre 2 peut être réalisée par moulage par compression de matériau thermoplastique ou thermodurcissable susceptible d'être renforcé. Le matériau pourra être un matériau thermoplastique tel qu'un polypropylène ou un polyamide. II pourra s'agir d'une matériau thermodurcissable tel qu'un polyester ou un vinylesther. Les renforts de matériau pourront comprendre des fibres de verre disposées par exemple sous forme aléatoire comme c'est le cas dans les flancs de matériaux dénommés TRE (Thermoplastique Renforcé Estampable) ou SMC (Sheet Moulding Compound). Il pourra s'agir de fibres tissées telles que des fibres orientées de façon équilibrée, déséquilibrée ou de fibres unidirectionnelles, par exemple celles rencontrées dans les produits en polypropylène de marque « Twintex » de la société Vetrotex ou encore le produit de marque « Tepex Dynalite Pa » de la société Bond Laminate. Enfin, il pourra s'agir de fils ou de cordes d'acier tels que les fils de marque « Betafence » ou les cordes de marque « Bekaert ». On se réfèrera par exemple aux matériaux présentés dans le document FR-2 749 535 au nom de la demanderesse dans le cadre de la fabrication d'une poutre de pare-chocs en matériau thermoplastique renforcé.

Les deux pièces 4 et 6 peuvent être assemblées par différentes techniques.

On pourra ainsi les souder par vibrations. A cette fin, on peut prévoir sur au moins l'une des deux pièces des cordons de soudure venus de moulage sur la pièce. En référence aux figures 5 à 8, des cordons de soudure ont ainsi été prévus sur des faces de la poutre externe 4 orientées vers la poutre interne. Trois cordons de soudure 40 courent le long de la face interne du fond 12 tandis que deux cordons de soudure 42 sont prévus sur chacun des bords supérieurs 26. Ces cordons, ici au nombre de sept, s'étendent tous suivant la direction longitudinale de la poutre qui correspond à la direction transversale du véhicule. On remarquera que, contrairement aux cordons associés au bord 26 qui sont rigoureusement parallèles les uns aux autres, les trois cordons 40 associés au fond 12 vont en divergeant les uns des autres dans les zones d'extrémité 32. Les cordons servent de directeurs d'énergie pour réaliser la soudure. Comme on le sait, pour un matériau donné, la soudure par vibrations se caractérise par un ensemble de réglages relatifs à la fréquence, la pression et l'amplitude de l'outil de soudure. On pourra donner par exemple aux cordons de soudure une hauteur mesurée perpendiculairement à la face sur laquelle les cordons sont formés environ égale à 2 mm et une largeur mesurée parallèlement à cette face située entre 2,2 et 2,5 mm.

On pourra également prévoir une soudure par induction en transmettant une énergie magnétique et en prévoyant au préalable un filament magnétique surmoulé dans la zone à souder sur les deux poutres, ce qui permet de fondre le matériau et de souder en appliquant une pression entre les deux pièces.

On pourra encore prévoir de coller les deux poutres l'une à l'autre en appliquant une colle adaptée au matériau à coller sur les zones de contact des deux poutres. Naturellement, la fixation des deux poutres l'une à l'autre a lieu au niveau des zones de contact entre elles.

On pourra prévoir de fixer les poutres externe et interne l'une à l'autre par un simple vissage avec les plaques de fixation servant à relier la poutre à la structure du véhicule. Trois orifices de vissage 17 ont été prévus à cette fin sur la figure 1 sur la poutre externe, à chaque extrémité du fond 12.

Lors d'un choc réparabilité (choc à 16 km/h contre une barrière rigide sur l'une des extrémités de la poutre), la rigidité du barreau central associé à la zone 30 peut dans certains cas s'avérer insuffisante pour réussir le test et absorber l'ensemble de l'énergie. Pour y pallier on pourra prévoir d'ajouter des absorbeurs sur ce barreau afin d'absorber localement l'énergie produite par l'impact. Ces absorbeurs pourront être reliés au barreau de plusieurs façons.

On pourra ainsi les intégrer lors du moulage des deux poutres et ce d'une façon connue en elle-même.

On pourra ajouter des tubes métalliques mus par des vérins rétractables qui se déclenchent au-delà d'un certain seuil d'énergie à absorber comme cela est également connu en soi. Dans ce cas, la fixation au barreau central peut se faire par l'intermédiaire de plaques d'acier soudées aux tubes et vissées au barreau.

Enfin, on pourra ajouter des absorbeurs indépendants réalisés par exemple en acier, en aluminium, en matière plastique ou en composite et fixés à la poutre par vissage ou boutrolage par exemple.

Le système d'absorption des chocs peut être adapté en fonction du pays destinataire du véhicule.

Sur la figure 5, qui représente la section verticale de la poutre correspondant au plan longitudinal médian du véhicule, la hauteur totale de la poutre est ici de 110 mm tandis que sa profondeur, parallèlement à la direction longitudinale du véhicule, est de 92,5 mm. La poutre externe présente une épaisseur de paroi de 3 mm tandis que la poutre interne a une épaisseur de paroi de 2,5 mm.

Après chauffage pour les porter à une température adaptée, les flancs de matériau servant à constituer la poutre interne ou externe sont disposés dans un moule comprenant un poinçon en partie inférieure et une matrice (creuse) en partie supérieure pour former la poutre interne ou externe.

La poutre selon l'invention présente en définitive un profil fermé plus apte à répondre à des chocs IIHS.

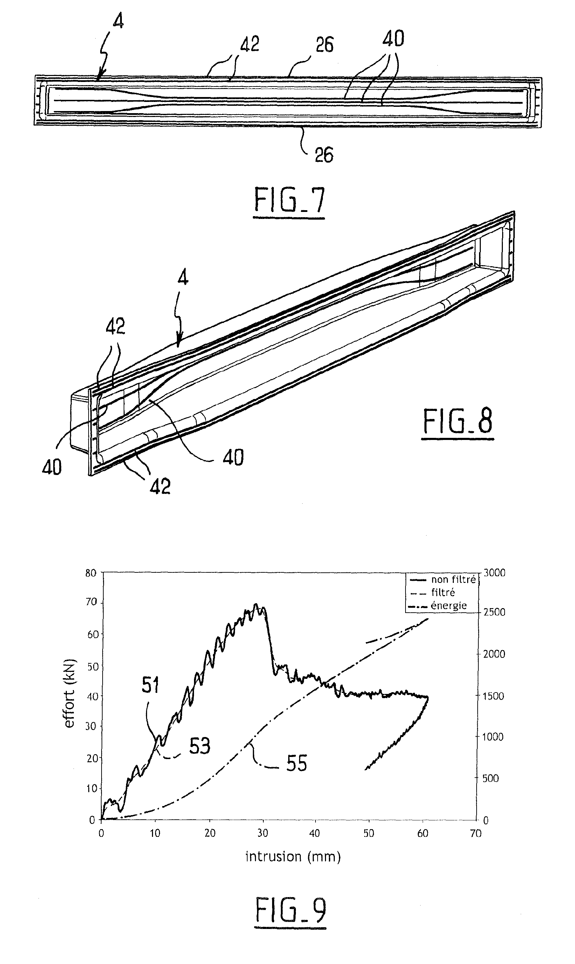

On a illustré à la figure 9 la courbe de simulation présentant l'évolution de l'effort en fonction de l'intrusion, dans le cadre d'un choc butoir à 8 km/h sur une poutre selon l'invention en matériau polyamide Tepex Dynalite. Les courbes 51, 53 et 55 illustrent respectivement le signal d'effort non filtré, le signal filtré ainsi que la quantité d'énergie reçue. Le diagramme montre que la poutre 2 formée par l'ensemble poutre externe et poutre interne peut respecter le cahier des charges des chocs ECE 42 et IIHS aux Etats-Unis. Lors du choc associé à la figure 9, la poutre selon l'invention est endommagée mais ne présente pas de rupture.

La poutre selon l'invention permet de répondre à la fois aux recommandations réglementaires du choc parking ECE 42, aux normes de choc IIHS aux Etats-Unis et Daner en Europe et aux chocs à grande vitesse contre une barrière déformable. La poutre interne permet à la poutre 2 de répondre notamment aux chocs IIHS et de passer les chocs à haute vitesse à 65 km/h contre une barrière déformable.

Bien entendu, on pourra apporter à l'invention de nombreuses modifications sans sortir du cadre de celle-ci.

## Revendications

1. Poutre (2) de pare-chocs pour véhicule comprenant :
- une poutre externe (4) définissant une cavité présentant un fond (12) et destinée à être ouverte en direction de l'intérieur du véhicule ; et
- une poutre interne (6) reçue dans la cavité,
**caractérisé en ce que** la poutre interne est en appui contre le fond.

2. Poutre (2) de pare-chocs pour véhicule, comprenant :
- une poutre externe (4) définissant une cavité présentant un fond (12), et comprenant une face externe courbe (52) suivant une direction longitudinale de la poutre ; et
- une poutre interne (6) reçue dans la cavité du même côté de la face (52) qu'un centre de courbure de la face,
**caractérisé en ce que** la poutre interne (6) est en appui contre le fond.

3. Poutre selon l'une quelconque des revendications précédentes,
**caractérisée en ce que** l'appui s'étend sur plus de la moitié de la longueur de la poutre.

4. Poutre selon l'une quelconque des revendications précédentes,
**caractérisée en ce que** le fond (12) est plat.

5. Poutre selon l'une quelconque des revendications précédentes,
**caractérisée en ce qu'**au moins l'une des poutres externe (4) et interne (6) a un profil en « U », notamment en « Ω ».

6. Poutre selon l'une quelconque des revendications précédentes,
**caractérisée en ce que** la poutre interne (6) comprend des parois supérieure (22) et inférieure (24), une distance entre les parois supérieure et inférieure étant plus faible dans une zone médiane (30) de la poutre que dans des zones d'extrémité (32) de la poutre.

7. Poutre selon l'une quelconque des revendications précédentes,
**caractérisée en ce que** la poutre interne (6) comprend des parois supérieure (22) et inférieure (24) s'étendant respectivement à distance de parois supérieure (8) et inférieure (10) de la poutre externe (4).

8. Poutre selon l'une quelconque des revendications précédentes,
**caractérisée en ce que** la poutre interne (6) présente des bords supérieur et inférieur (26) en appui contre des bords supérieur et inférieur (14) de la poutre externe (4).

9. Poutre selon la revendication précédente, **caractérisée en ce que** les bords (14, 26) sont parallèles au fond (12).

10. Poutre selon l'une quelconque des revendications précédentes,
**caractérisée en ce qu'**au moins l'une des poutres externe (4) et interne (6) est en matière synthétique, notamment en matière plastique, de préférence renforcée.

11. Pare-chocs pour véhicule comportant une poutre (2), **caractérisé en ce que** la poutre est conforme à l'une quelconque des revendications précédentes.

12. Véhicule **caractérisé en ce qu'**il comprend un pare-chocs selon la revendication précédente, le pare-chocs faisant partie du groupe suivant :
- un pare-chocs avant ; et
- un pare-chocs arrière.

13. Procédé de fabrication d'une poutre (2) de pare-chocs de véhicule, **caractérisé en ce qu'**on place une poutre interne (6) dans une cavité d'une poutre externe (4) destinée à être ouverte en direction de l'intérieur du véhicule, avec la poutre interne en appui contre un fond (12) de la cavité.

14. Procédé selon la revendication précédente, **caractérisé en ce qu'**on fixe les poutres externe et interne l'une à l'autre par soudage, collage et/ou vissage.

15. Procédé selon l'une quelconque des revendications 13 ou 14,
**caractérisé en ce qu'**on forme des cordons (40, 42) sur au moins l'une (4) des poutres externe et interne en vue d'un soudage des poutres par vibration.
